# EUROPEAN PATENT SPECIFICATION

(11) **EP 0 462 013 B1**
(45) Date of publication and mention of the grant of the patent: **10.05.1995**
(21) Application number: 91401576.3
(22) Date of filing: 13.06.1991
(51) Int. Cl.: G01C 21/20, G06K 11/18

(54) **Portable positional information display device for locating an object**
Tragbare Vorrichtung zur Anzeige von Positionsinformation zwecks Bestimmung des Standortes eines Objekts
Dispositif portatif d'affichage d'une information de position pour la localisation d'un objet

(30) Priority: 15.06.1990 JP 157109/90
(43) Date of publication of application: 18.12.1991
(73) Proprietor: SONY CORPORATION, Tokyo (JP)
(72) Inventor: Kojima, Kiyonobu, Shinagawa-ku, Tokyo (JP)
(74) Representative: Thévenet, Jean-Bruno

(56) References cited:
- FR-A- 2 634 707
- IBM TECHNICAL DISCLOSURE BULLETIN. vol. 27, no. 1A, June 1984, NEW YORK US page 42; C.H. LEWIS: 'POSITION-CONTROLLED DISPLAY'
- SCIENTIFIC AMERICAN. vol. 257, no. 4, October 1987, NEW YORK US pages 82 - 90; JAMES D. FOLEY: 'INTERFACES FOR ADVANCED COMPUTING'

## Description

### FIELD OF THE INVENTION

The present invention relates to a portable positional information display device for locating an object, and more particularly to a hand-held device capable of indicating the three-dimensional position of a designated object relative to itself so as to enable its user to locate the object, e.g. a book or some other stored item by visual information.

The concept of indicating the relative positions between a fixed and a mobile object generally belongs to the field of navigation.

### BACKGROUND OF THE INVENTION

In the prior art, navigation systems used for guiding vessels or aicraft, or the like largely employ computer technology. Such systems in practical use today are applied to spaceships, airplanes, vessels, and the like, but attempts are also being made to apply them to smaller machines such as road vehicles. In such navigation systems, a vessel or the like can detect its current position at all times typically by means of a global positioning system (GPS) or the like through transmitted radiowaves from artificial satellites or the like and navigate to a destination shown on a plane map.

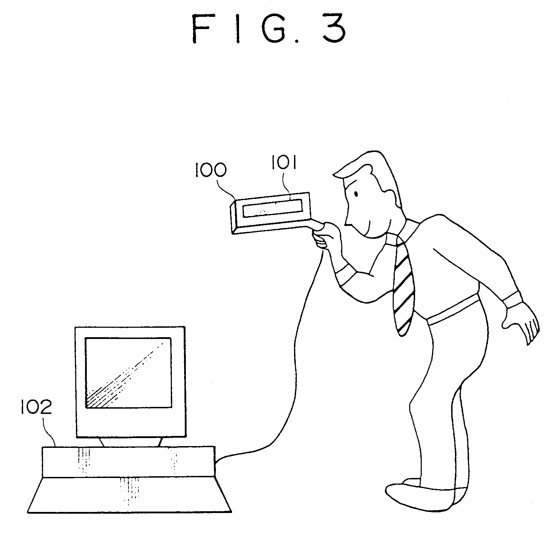

In an application to locate a book, document, or the like, it is possible to use an information retrieval device provided with an electronic magnifier 100 as shown in figure 3. The electronic magnifier 100 is designed as a hand-held device that comprises a flat display 101 and a three-dimensional position and orientation detector, e.g. based on an acceleration sensor and connected to a separate computer system 102. This arrangement enables the user to retrieve a desired set of electronic information just as the user searches the surroundings for a desired thing. In this example, actual objects shown in the electronic magnifier 100 do not exist in real space, but are stored in the virtual space within the computer system 102. A portion of the virtual space is made to simulate a given portion of real space on the display 101 in correlation with the three-dimensional position and orientation of the electronic magnifier 100 itself. For instance, when the magnifier 100 is directed toward a desk, a display is made on the flat display 101 as if there were a number of books on the desk, though none is there in reality. As the user approaches the books, titles, etc. of the books come to be seen, as the user approaches nearer to a book, the contents of the book come to be seen, and so on.

In such an information retrieval device the generation of a virtual space requires that actual things seen from all positions and orientations are converted into a digital signal by means of a video camera or image scanner and that the signal is electronically stored in a computer system 102. Hence, there is a problem that the inputting of the images of the actual items involves a considerable amount of time and expense, and the quantity of data to be stored becomes vast. Accordingly, even if the magnifier 100 can be made hand-held, it still remains difficult to make the computer system 102 small in size. Hence, an application of the described system to a navigational search for an object appears as unrealistic from the point of view of portability alone. Further, in the above described information retrieval system, the objects of retrieval are limited to those which can be represented by images and, hence, such actual things that cannot readily be represented by images, such as goods in warehouse or on the shelves cannot be dealt with.

There is also known from document FR-A-2 634 707 a vehicle navigation system based on the means defined in the preamble of claim 1.

### SUMMARY OF THE INVENTION

The present invention intends to overcome the above mentioned difficulties and accordingly it is an object of the present invention to provide a portable positional information display device, or, so to say, a "personal navigation system", whereby a person in an environment of e.g. library, warehouse, or office, can be navigated so as to easily find an object being searched for.

Thus, according to the present invention, there is provided a portable retrieval and display device as defined in claim 1.

In the present invention, the information to be stored in advance is comprised of information relative to the three-dimensional positions of the objects to be located (as opposed to visual representations of those objects), so that the quantity of the data to be stored can consequently be greatly reduced and the overall equipment can be made portable. Upon designation of an object to be located by the user, the aspect of the space obtained from the current position and orientation of the device is simulated as a window on the basis of the then detected information of the position and orientation of the device. A pointer, say, indicating the position of the designated object is then three-dimensionally displayed on the simulated window to be shown to the user on the basis of the information of the three-dimensional position of the object of retrieval, and so there is effectively created, a three-dimensional navigation system.

Preferably, the pointer - or cursor - indicates the lateral distance and relative height of the object to be located by its displayed position, and indicates the relative distance of the object to be located in the depth dimension (i.e. forward direction with respect to the user viewing the display face-on) by its size.

### BRIEF DESCRIPTION OF THE FIGURES

An embodiment of the present invention will be described below in detail with reference to the accompanying drawings, in which:
Figure 1 is a highly schematic perspective view showing the structure of an embodiment of the present invention,
Figure 2 is a block diagram showing the structure of a controller used in the above embodiment, and
Figure 3 is an explanatory drawing of a previously considered apparatus not forming part of the invention.

### DESCRIPTION OF PREFERRED EMBODIMENT

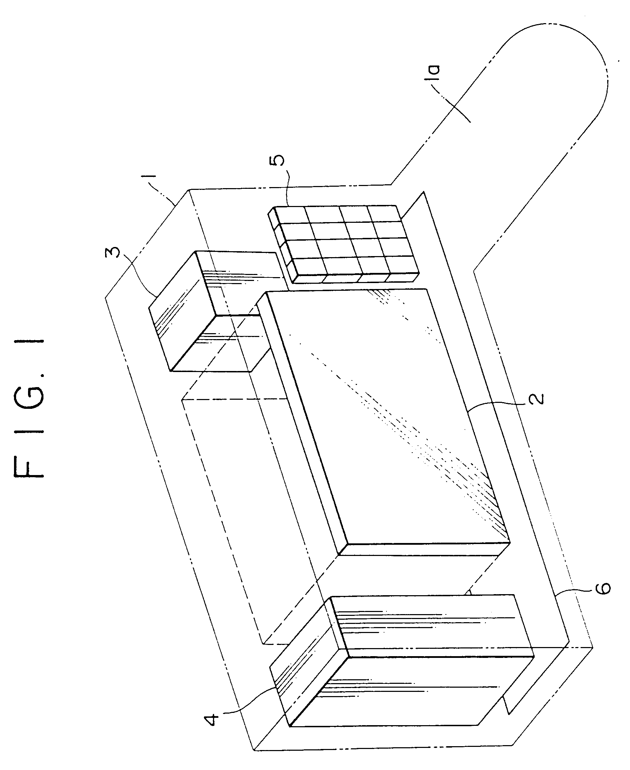

Figure 1 gives a general idea of the structure of an embodiment of the present invention. The object location display device of the present invention is formed of a hand-held housing 1 having a hand grip portion 1a and provided with a flat display 2, a three-dimensional position and orientation sensor 3, a bar code reader 4, a ten-key pad 5, and a controller 6 integrally mounted thereon.

The flat display 2 using a transparent liquid crystal display panel is attached to the housing such that an aspect of the real world can be overlain with a display of an indication of the position of the object to be located by the computer. Thus, the front side of the housing 1 (the side facing the user) is arranged as the display surface and the rear side (the side facing the object of retrieval) as the aperture.

The three-dimensional position and orientation sensor 3, may be implemented using an acceleration sensor as derived from the technology employed in known inertial navigation systems. In this case, the apparatus is autonomous as regards determining positional information, except for the initialisation and re-calibration procedures.

Alternatively, the position sensor 3 can cooperate with fixed devices at predetermined locations to determine its position by data exchange therewith. In this case, the sensor can be an acoustic or electromagnetic data receiver cooperating with corresponding data sources to determine its position using techniques well known to the skilled person, e.g. in the field of telemetry and range-finding.

Any such type of position sensing system may be used, provided that it is small in size. For example, when using an electromagnetic type of sensing system, one or more signal sources may be placed in the space such as a room, and coils having directivity in three directions are provided for the sensor located in the device. In this way, the distance and direction to the signal source can be known from the currents induced in these coils. When using ultrasonic type of sensing system, three or more of ultrasonic wave sources may be disposed at corners of the space, such as a room, and thereby, the three-dimensional position and orientation can be known by obtaining the difference in distance or directivity from the ultrasonic wave sources.

The bar code reader 4 is disposed, for example, on the side surface opposite to the grip portion 1a of the housing 1. It is used to read pro-recorded data on bar codes attached to the objects to be made accessible for location, e.g. books, binders, or goods. These data, which serve for identification, are recorded by the controller 6 together with the information concerning the three-dimensional positions of the corresponding objects, as obtained by the sensor 3 and the associated position determination system. The ten-key pad 5, disposed on the front side of the housing 1, is used at the time of an object search for specifying the identification number of an arbitrarily chosen object for location.

Thus, in a normal recording procedure, the hand-held housing 101 is brought up to a given object to record both its identification number, using the bar code reader 4, and the position of that object, using the position detection system 3. The controller 6 has a memory storing information of three-dimensional positions of all the objects of retrieval such as books and goods in connection with their identification numbers, and is adapted, when an identification number is entered from the ten-key pad 5 at the time of retrieval, to display, e.g. a pointer, provided by a cursor or the like, of the current position of the object of retrieval corresponding to the identification number on the basis of the current three-dimensional position of the unit 101 and orientation detected by the three-dimensional position and orientation sensor 3. This visual information is overlain on the view of the real world transmitted through the transparency of the flat display 2.

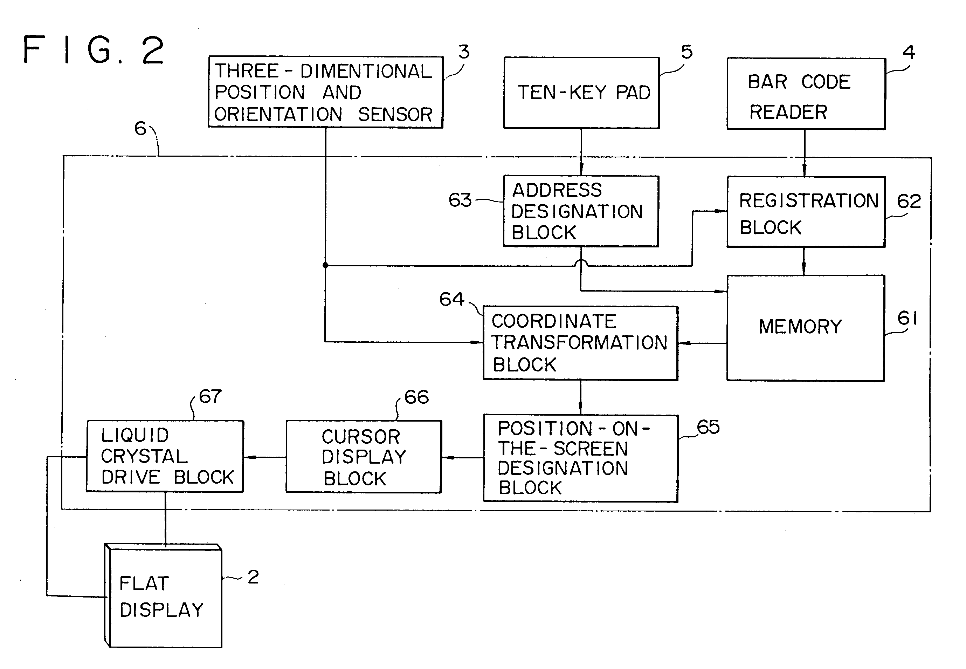

Figure 2 is a block diagram showing a structure of the controller 6. With reference to the structure of the controller 6, reference numeral 61 denotes a memory for storing information of three-dimensional positions of all the objects of retrieval in connection with their identification numbers, 62 denotes a registration block accepting the read output of the bar code reader 4 and also accepting the position and orientation information detected by the three-dimensional position and orientation sensing system 3 for recording information concerning the three-dimensional positions of the objects to be located in the memory 61 in advance, 63 denotes an address designation block accepting the identification number entered through the ten-key pad 5 at the time of retrieval for specifying a corresponding address in the memory 61, 64 denotes a coordinate transformation block for transforming the three-dimensional position of the object of retrieval read from the memory 61 according to the address specified as described above into the three-dimensional position in the actual world referenced from the current three-dimensional position and orientation input from the three-dimensional position and orientation sensing system 3, 65 denotes a position-on-the-screen designation block for specifying the position of the object to be located on the screen of the flat display 2 in accordance with the three-dimensional position of the object transformed as described above, 66 denotes a cursor display block for generating an output for displaying a pointer (a cursor in the present case) indicating the object at its corresponding position on the screen, and 67 denotes a liquid crystal drive block accepting the display output for displaying the cursor on the flat display 2. The cursor indicates the lateral distance and height of the object of retrieval by its displayed position and indicates the depth, for example, by its size.

Operations and functions of the embodiment arranged as above will be described below.

Information of three-dimensional positions of objects to be located are registered in the display device. Prior to this, the objects of retrieval are each provided with a bar code indicating its identification number in advance. To begin with, the retrieval display device is set into a registration mode designated, for example, by means of the ten-key pad 5. Under this state, the bar code of each of the books, binders, goods, and the like to be located is scanned and read by the bar code reader 4 and, at the same time, the three-dimensional position (coordinates) of each item is read by the three-dimensional position and orientation sensing system 3. Thereupon, the identification number indicated by the bar code and the three-dimensional position are related by the registration block 62 and stored in the memory 61.

Then, the display device is put into a search mode designated, for example, by means of the ten-key pad 5. In this mode, the hand-held device detects its current position and orientation and simulates a window offering a view just as seen through a one-power magnifying glass. On the basis of the three-dimensional position registered in the memory 61, the device displays the pointer, such as a cursor, indicating the object, superposed on the real world which is viewed through the glass window of the flat display 2. The designation of the object to be located is effected by the user inputting the identification number and the like through the ten-key pad 5, and thereby, the above described cursor is displayed. This cursor moves in correlation with the displacements of the display device, always indicating the position, or the depth in addition to the position, of the object of retrieval from the visual point of the device. The user can reach the object by walking towards it in accordance with the indication of the cursor while peeping through the display device.

The registration of the object to be located need not necessarily be made by means of the bar code but may be effected by inputting the identification number through the ten-key pad 5 or the like. In this case, the three-dimensional position of the object of retrieval should be set by means of the three-dimensional position and orientation sensor 3 before the identification number of the object is manually input through the ten-key pad 5. Further, in registering and locating an object, the name of the object can be used instead of its identification number. In entering the identification number at the time of retrieval, the device may be temporarily connected to another computer system such as a classification-retrieval device to be supplied with the identification number entered therefrom. Of course, the output obtained as a result of its classification-retrieval process may be used. The pointer displayed on the screen may be a dot, a circle, or a square, or else it may be a shape of a book or the like symbolizing the object. Instead of the transparent flat display 2, an opaque one may be used by arranging such that passageways and shelves in the real world are represented by straight lines and the like and stored in the controller 6 and such a virtual world is displayed on the display just as a window from which a view of it in accordance with the current position and orientation is offered. This is feasible as such an arrangement does not require a great deal of information. Further, the controller 6 need not be incorporated in the housing but may be separated as a portable body.

In the present example, the means for transferring information directly from the object to the device involves the use of bar codes of course, other means may also be used for this purpose, such as a pre-recorded magnetic track attached to each object, in which case the bar-code reader would be replaced by a magnetic track reader. Similarly, other forms of information recordings may be used, as will be obvious to the skilled person.

According to the portable retrieval display device of the present invention, as apparent from the explanation given above, a personal three-dimensional navigation system, which is intuitively and easily operated, and which was not implemented in the conventional systems of navigation of airplanes and vehicles, has been established with the idea of simulating a window. Further, it has been made possible to electronically manage actual objects to be located while leaving them as they are.

## Claims

1. A portable positional information display device comprising:
a three-dimensional position and orientation sensor (3) capable of sensing its current position and orientation;
means (5, 6) for acquiring and storing information relative to positions of all objects to be locatable in advance;
means (5) for designating a desired object to be located;
means (2) for displaying information indicating the three-dimensional position of said desired object to be located; and
means (6) responsive to information concerning the current position and orientation obtained by said three-dimensional position and orientation sensor and the stored positional information of a designated object to be located, for instructing said displaying means to display information indicating the three-dimensional position of said object to be located on a display screen,
characterized in that the said means (5, 6) for acquiring and storing information comprises a data reader for reading predetermined data attached to and identifying each said object to be locatable and a memory (61) for storing said read data in association with the three-dimensional position where said reading takes place, said position being determined through said three-dimensional position and orientation sensor (3).

2. Device according to claim 1, characterized in that said information concerning the three-dimensional position of the object to be located is in the form of a cursor.

3. Device according to claim 2, characterized in that said cursor indicates the lateral distance and relative height of the object to be located by its displayed position, and indicates the relative distance of the said object to be located in the depth dimension, which is the forward direction with respect to the user viewing the display (2) face-on, by its size.

4. Device according to claims 2 or 3, characterized in that said cursor is in the form of a symbol representing the object to be located.

5. Device according to any one of claims 1 to 4, characterized in that the flat display (2) is transparent and arranged to form a window providing a view through the housing (1), and in that said controller (6) has means (61, 64, 65, 66, 67) for displaying said information concerning the three-dimensional position of the object to be located in correlation with the present position and orientation of the said device, whereby said displayed information appears overlain on the view seen through the display (2) to indicate the said three-dimensional position relative to that view.

6. Device according to any one of claims 1 to 4, characterized in that the display (2) is opaque, and in that said controller (6) has means (61, 64, 65, 66, 67) for displaying said information concerning the three-dimensional position of the object to be located in correlation with the present position and orientation of the said device, such that the display shows both a simulation of what would appear through said display when it were transparent and the said displayed information to indicate the said three-dimensional position relative to the said simulated view.

7. Device according to any one of claims 1 to 5, characterized in that said means (5) for designating a desired object to be located is a keypad.

8. Device according to any one of claims 1 to 7, characterized in that said data reader comprises a bar-code reader, or a magnetic track reader, to read bar codes or a pre-recorded magnetic track being respectively provided on the objects.

9. Device according to any one of claims 1 to 8, characterized in that said position sensor (3) is implemented using an acceleration sensor, whereby said apparatus is autonomous as regards determining said positional information

10. Device according to any one of claims 1 to 8, characterized in that said position sensor (3) comprises an acoustic or electromagnetic data receiver cooperating with fixed data sources at predetermined locations to determine its position by data exchange therewith.

## Patentansprüche

1. Tragbare Anzeigevorrichtung für Positionsinformationen, die folgendes aufweist:
einen dreidimensionalen Positions- und Orientierungssensor (3), der in der Lage ist, seine aktuelle Lage und Ausrichtung zu erfassen;
Mittel (5,6) zur Erfassung und Speicherung von Informationen bzgl. der Positionen aller Objekte, die lokalisierbar sein sollen, im Vorraus;
Mittel (5) zur Bestimmung eines gewünschten zu lokalisierenden Objekts;
Mittel (2) zur Darstellung von Informationen, die die dreidimensionale Position des gewünschten zu lokalisierenden Objektes anzeigen; und
Mittel (6), die auf Informationen ansprechen, die die aktuelle Position und Orientierung betreffen, die durch den dreidimensionalen Positions- und Orientierungssensor und die abgespeicherte Positionsinformation eines bestimmten zu lokalisierenden Objektes erhalten werden, zur Anweisung der Darstellungsmittel Informationen darzustellen, die die dreidimensionale Position des zu lokalisierenden Objektes auf einem Anzeigebildschirm anzeigen,
**dadurch gekennzeichnet**, daß die Mittel (5,6) zur Erfassung und Speicherung von Informationen einen Datenleser zum Lesen vorbestimmter Daten, die an jedem der zu lokalisierenden Objekte befestigt sind und diese identifizieren, und einen Speicher (61) zur Speicherung der Lesedaten im Zusammenhang mit der dreidimensionalen Position, an der das besagte Lesen stattfindet, aufweisen, wobei die Position durch den dreidimensionalen Positions- und Orientierungssensor (3) bestimmt wird.

2. Vorrichtung nach Anspruch 1, **dadurch gekennzeichnet**, daß die die dreidimensionale Position eines zu lokalisierenden Objektes betreffende Information in Form eines Cursors vorliegt.

3. Vorrichtung nach Anspruch 2, **dadurch gekennzeichnet**, daß der Cursor den lateralen Abstand und die relative Höhe des zu lokalisierenden Objektes anzeigt durch seine dargestellte Position, und den relativen Abstand des zu lokalisierenden Objektes in der Tiefenabmessung durch seine Größe anzeigt, welches die vordere Richtung in Bezug auf die Sicht des Benutzers auf die direkt vor ihm plazierte Anzeige (2) ist.

4. Vorrichtung nach Anspruch 2 oder 3, **dadurch gekennzeichnet**, daß der Cursor in Form eines Symboles vorliegt, das das zu lokalisierende Objekt darstellt.

5. Vorrichtung nach einem der Ansprüche 1 bis 4, **dadurch gekennzeichnet**, daß die flache Anzeige (2) transparent und derart angeordnet ist, daß sie ein eine Durchsicht durch das Gehäuse (1) bereitstellendes Fenster bildet, und daß das Steuerelement (6) Mittel (61, 64, 65, 66, 67) zur Anzeige der Informationen aufweist, die die dreidimensionale Position des zu lokalisierenden Objektes in Zusammenhang mit der aktuellen Position und Orientierung der Vorrichtung betreffen, wobei die angezeigte Information in der Ansicht durch die Anzeige (2) überlagert erscheint, um die dreidimensionale Position relativ zu dieser Ansicht anzuzeigen.

6. Vorrichtung nach einem der Ansprüche 1 bis 4, **dadurch gekennzeichnet**, daß die Anzeige (2) undurchsichtig ist, und daß das Steuerelement (6) Mittel (61, 64, 65, 66, 67) zur Anzeige der Informationen aufweist, die die dreidimensionale Position des zu lokalisierenden Objektes betreffen, in Zusammenhang mit der aktuellen Position und Orientierung der Vorrichtung, sodaß die Anzeige sowohl eine Simulation dessen zeigt, was mittels der Anzeige erscheinen würde, wenn sie transparent wäre, als auch die dargestellte Information, um die dreidimensionale Position relativ zu der simulierten Ansicht anzuzeigen.

7. Vorrichtung nach einem der Ansprüche 1 bis 5, **dadurch gekennzeichnet**, daß das Mittel (5) zur Bestimmung eines gewünschten zu lokalisierenden Objektes ein Tastenblock ist.

8. Vorrichtung nach einem der Ansprüche 1 bis 7, **dadurch** **gekennzeichnet**, daß der Datenleser einen Barcodeleser oder einen Magnetspurleser aufweist, um einen Barcode oder eine voraufgezeichnete Magnetspur zu lesen, die entsprechend auf den Objekten bereitgestellt sind.

9. Vorrichtung nach einem der Ansprüche 1 bis 8, **dadurch gekennzeichnet**, daß der Positionssensor (3) unter Verwendung eines Beschleunigungssensors realisiert wird, wobei die Vorrichtung autonom ist, was die Bestimmung der Positionsinformation anbetrifft.

10. Vorrichtung nach einem der Ansprüche 1 bis 8, **dadurch gekennzeichnet**, daß der Positionssensor (3) einen akustischen oder elektromagnetischen Datenempfänger aufweist, der mit festgelegten Datenquellen an vorbestimmten Orten zusammenarbeitet, um durch Datenaustausch mit diesen deren Position zu bestimmen.

## Revendications

1. Dispositif portatif d'affichage d'information de position, comprenant : un capteur (3) de position tridimensionnelle et d'orientation, pouvant détecter sa position et son orientation courantes;
un moyen (5,6) permettant d'acquérir et de mémoriser préalablement des informations relatives aux positions de tous les objets afin de les rendre localisables;
un moyen (5) servant à désigner un objet voulu à localiser;
un moyen (2) servant à afficher une information indiquant la position tridimensionnelle dudit objet voulu à localiser; et
un moyen (6) qui répond à l'information relative à la position et à l'orientation courantes obtenue à l'aide dudit capteur de position tridimensionnelle et d'orientation et à l'information de position mémorisée d'un objet désigné à localiser, en donnant instruction audit moyen d'affichage d'afficher une information indiquant la position tridimensionnelle dudit objet à localiser sur un écran d'affichage,
caractérisé en ce que ledit moyen (5,6) d'acquisition et de mémorisation d'information comprend un lecteur de données servant à lire une donnée prédéterminée fixée à chaque dit objet rendu localisable et identifiant celui-ci, et une mémoire (61) servant à mémoriser ladite donnée lue en association avec la position tridimensionnelle lorsque ladite lecture a lieu, ladite position étant déterminée via ledit capteur de position tridimensionnelle et d'orientation (3).

2. Dispositif selon la revendication 1, caractérisé en ce que ladite information concernant la position tridimensionnelle de l'objet à localiser se présente sous la forme d'un curseur.

3. Dispositif selon la revendication 2, caractérisé en ce que ledit curseur indique la distance latérale et la hauteur relative de l'objet à localiser par sa position affichée et indique par sa taille la distance relative dudit objet à localiser suivant la dimension de la profondeur, qui est la direction avant par rapport à l'utilisateur regardant la face avant du moyen d'affichage (2).

4. Dispositif selon la revendication 2 ou 3, caractérisé en ce que ledit curseur se présente sous la forme d'un symbole représentant l'objet à localiser.

5. Dispositif selon l'une quelconque des revendications 1 à 4, caractérisé en ce que ledit moyen d'affichage plat (2) est transparent et est conçu pour former une fenêtre offrant une vue à travers le boîtier (1),
et en ce que ledit moyen de commande (6) possède un moyen (61, 64, 65, 66, 67) permettant d'afficher ladite information concernant la position tridimensionnelle de l'objet à localiser en corrélation avec la position et l'orientation courantes dudit dispositif, de sorte que ladite information affichée paraît couvrir la vue offerte à travers le moyen d'affichage (2) afin d'indiquer ladite position tridimensionnelle par rapport à cette vue.

6. Dispositif selon l'une quelconque des revendications 1 à 4, caractérisé en ce que le moyen d'affichage (2) est opaque, et en ce que ledit dispositif de commande (6) possède un moyen (61, 64, 65, 66, 67) permettant d'afficher ladite information concernant la position tridimensionnelle de l'objet à localiser en corrélation avec la position et l'orientation courantes dudit dispositif, de telle sorte que le moyen d'affichage montre à la fois une simulation de ce qui apparaîtrait à travers ledit moyen d'affichage si celui-ci était transparent et ladite information affichée afin d'indiquer ladite position tridimensionnelle par rapport à ladite vue simulée.

7. Dispositif selon l'une quelconque des revendications 1 à 5, caractérisé en ce que ledit moyen (5) servant à désigner un objet voulu à localiser est un clavier.

8. Dispositif selon l'une quelconque des revendications 1 à 7, caractérisé en ce que ledit lecteur de données comprend un lecteur de codes à barres, ou un lecteur de pistes magnétiques, afin de lire des codes à barres ou une piste magnétique enregistrée qui sont respectivement placés sur les objets.

9. Dispositif selon l'une quelconque des revendications 1 à 8, caractérisé en ce que ledit capteur de position (3) est mis en oeuvre à l'aide d'un capteur d'accélération, de sorte que ledit appareil est autonome en ce qui concerne la détermination de ladite information de position.

10. Dispositif selon l'une quelconque des revendications 1 à 8, caractérisé en ce que ledit capteur de position (3) comprend un récepteur de données acoustiques ou électromagnétiques qui coopère avec des sources de données fixes se trouvant en des emplacements prédéterminés afin de déterminer sa position par échange de données avec celles-ci.
